# EUROPEAN PATENT SPECIFICATION

(11) **EP 3 063 917 B1**
(45) Date of publication and mention of the grant of the patent: **26.09.2018**
(21) Application number: 14767155.6
(22) Date of filing: 27.08.2014
(51) Int. Cl.: H04L 29/06, H04L 9/08, H04W 12/04, G06F 21/55, H04W 4/02, H04W 72/12, H04W 76/14

(54) **SECURITY MANAGEMENT ACCORDING TO LOCATION CHANGE IN PROXIMITY BASED SERVICES**
SICHERHEITSVERWALTUNG ENTSPRECHEND EINER STANDORTÄNDERUNG IN NÄHEBASIERTEN DIENSTEN
GESTION DE LA SÉCURITÉ EN FONCTION D'UN CHANGEMENT D'EMPLACEMENT DANS DES SERVICES BASÉS SUR LA PROXIMITÉ

(30) Priority: 28.10.2013 JP 2013223326
(43) Date of publication of application: 07.09.2016
(73) Proprietor: NEC Corporation, Tokyo 108-8001 (JP)
(72) Inventor: ZHANG, Xiaowei, Tokyo 108-8001 (JP); PRASAD, Anand Raghawa, Tokyo 108-8001 (JP)
(74) Representative: MacDougall, Alan John Shaw
(86) International application number: PCT/JP2014/004385
(87) International publication number: WO 2015/063990

(56) References cited:
- US-A1- 2007 016 663
- US-A1- 2013 013 932
- NEC: "ProSe Discovery", 3GPP DRAFT; S2-133358, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Valencia, Spain; 20130715 - 20130719 18 September 2013 (2013-09-18), XP050726714, Retrieved from the Internet: URL:http://www.3gpp.org/ftp/tsg_sa/WG2_Arc h/TSGS2_99_Xiamen/Docs/ [retrieved on 2013-09-18]

## Description

### Technical Field

The present invention relates to security management according to location change in ProSe (Proximity based Services).

### Background Art

3GPP (3rd Generation Partnership Project) has started to study ProSe for both commercial and public safety uses.

ProSe communication can provide services to UEs (more than one article of User Equipment) in proximity via an eNB (evolved Node B) or without the eNB. If the UEs are in proximity to each other, the UEs may able to use a "direct mode" path or "locally-routed" path. The "direct mode" path means that communication is conducted through direct links between the UEs. The "locally-routed" path means that communication is conducted through the eNB when the UEs are served by the same eNB (see e.g., NPL 1).

### Citation List

### Non Patent Literature

**NPL 1:** 3GPP TR 22.803, "Feasibility study for Proximity Services (ProSe) (Release 12)", V12.2.0, 2013-06, Clause 4.1, pp. 10-11
**NPL 2:** 3GPP TR 23.703, "Study on architecture enhancements to support Proximity Services (ProSe) (Release 12)", V0.4.1, 2013-06, Clauses 4 and 6.1.4.1.3, pp. 7-11 and 31-32

US 2007/016663 discloses an approach for managing state information by a group of servers that services a group of clients. One server is designated as the primary server and is responsible for generating state information to be used by both the servers and the clients. The remaining servers are designated as secondary servers that help to manage the group, but which do not generate the state information. When the primary server fails or is not available due to a network partition event, one of the secondary servers changes role to become the primary server. With a network partition event, each partition can have a primary server, and when the network partition heals, one of the primary servers changes role back to being a secondary server.

US 2013/013932 discloses a method and a system of managing information security for a mobile device in a restricted area based on location information regarding the mobile device. The method includes receiving, by the mobile device, a request for the execution of an application program in a restricted area from a server managing the restricted area, executing, by the mobile device, the application program requested for execution when the program was set to be executable according to a security policy set to the restricted area, encrypting, by the mobile device, a file, created according to the execution of the application program, based on location information regarding the mobile device, and storing the encrypted file.

NEC: "ProSe Discovery", 3GPP Draft S2-133358; vol SA WG2; 18 September 2013; 3GPP Mobile Competence Centre, 650 Route des Lucioles, Sophia-Antipolis, Cedex, France discloses once a UE detects that it enters a proximity area, where the probability is high to meet a specific UE of the service that the UE subscribed to, then it turns on its D2D discovery and announces itself as well as it is listening to the announcements of other UEs. When the UE leaves a Proximity Area it turns off its D2D discovery.

### Summary of Invention

### Technical Problem

While UEs are using ProSe service, some or all the UEs may move to a different location. Therefore, the inventors of this application have found that upon providing the ProSe service, there are the following problems:
1) keep ProSe service and secure the ProSe service for the UEs are still in proximity; and
2) prevent security context from being re-used by the UEs moved out of the proximity range of the given ProSe service and where the security context was established.

Currently, there is no solution in 3GPP specifications. Note that NPL 2 merely discloses that a GMLC (Gateway Mobile Location Centre) can transmit location information of UEs to a ProSe server which supports the Prose communication.

### Solution to Problem

The present invention provides a server, a UE, a system and associated methods as set out in the appended independent claims. Optional features are set out in the appended dependent claims. A server in a communication system for Proximity based Services, ProSe, including a plurality of User Equipment, UEs, in proximity, an Evolved Universal Terrestrial Radio Access Network, E-UTRAN, and an Evolved Packet Core, EPC, according to first exemplary aspect of the present invention includes: monitor means for monitoring locations of UEs (more than one article of User Equipment) that are grouped to conduct ProSe communication with each other; and management means for managing security of the ProSe communication based on the locations.

Further, a UE in a communication system for Proximity based Services, ProSe, including a plurality of User Equipment, UEs, in proximity, an Evolved Universal Terrestrial Radio Access Network, E-UTRAN, and an Evolved Packet Core, EPC, according to second exemplary aspect of the present invention is grouped with different

UEs to conduct ProSe communication with each other. This UE includes: update means for updating a session key used for the ProSe communication in response to reception of an instruction from a server, the instruction being issued when the server detects that one or more UEs among the different UEs have moved out of a range of the group; and request means for requesting remaining UEs to update the session key.

Further, a UE according to third exemplary aspect of the present invention is grouped with different UEs to conduct direct communication with each other. This UE includes removal means for removing a session key used for the ProSe communication in response to reception of an instruction from a server, the instruction being issued when the server detects that the UE has moved out of a range of the group.

Further, a communication system for Proximity based Services, ProSe, according to fourth exemplary aspect of the present invention includes: an Evolved Universal Terrestrial Radio Access Network, E- UTRAN; an Evolved Packet Core, EPC; a plurality of UEs in proximity that are grouped to conduct ProSe communication with each other; and a server that monitors locations of the plurality of UEs, and manages security of the ProSe communication based on the locations.

Further, a method according to fifth exemplary aspect of the present invention provides a method of controlling operations in a server in a communication system for Proximity based Services, ProSe, including a plurality of User Equipment, UEs, in proximity, an Evolved Universal Terrestrial Radio Access Network, E-UTRAN, and an Evolved Packet Core, EPC. This method includes: monitoring locations of UEs that are grouped to conduct ProSe communication with each other; and managing security of the ProSe communication based on the locations.

Further, a method according to sixth exemplary aspect of the present invention provides a method of controlling operations in a UE in a communication system for Proximity based Services, ProSe, including a plurality of User Equipment, UEs, in proximity, an Evolved Universal Terrestrial Radio Access Network, E-UTRAN, and an Evolved Packet Core, EPC, that is grouped with different UEs in proximity to conduct ProSe communication with each other. This method includes: updating a session key used for the ProSe communication in response to reception of an instruction from a server, the instruction being issued when the server detects that one or more UEs among the different UEs have moved out of a range of the group; and requesting remaining UEs to update the session key.

Furthermore, a method according to seventh exemplary aspect of the present invention provides a method of controlling operations in a UE in a communication system for Proximity based Services, ProSe, including an Evolved Universal Terrestrial Radio Access Network, E-UTRAN, and an Evolved Packet Core, EPC that is grouped with different UEs in proximity to conduct ProSe communication with each other. This method includes removing a session key used for the ProSe communication in response to reception of an instruction from a server, the instruction being issued when the server detects that the UE has moved out of a range of the group.

### Advantageous Effects of Invention

According to the present invention, it is possible to solve the above-mentioned problems, and thus to provide a solution for effectively managing security of ProSe communication.

### Brief Description of Drawings

[Fig. 1] Fig. 1 is a block diagram showing a configuration example of a communication system according to an exemplary embodiment of the present invention.
[Fig. 2] Fig. 2 is a diagram showing a first example of scenarios of how UEs change locations.
[Fig. 3] Fig. 3 is a diagram showing a second example of scenarios of how UEs change locations.
[Fig. 4] Fig. 4 is a diagram showing a third example of scenarios of how UEs change locations.
[Fig. 5] Fig. 5 is a sequence diagram showing a first operation example of the communication system according to the exemplary embodiment.
[Fig. 6] Fig. 6 is a sequence diagram showing a second operation example of the communication system according to the exemplary embodiment.
[Fig. 7] Fig. 7 is a sequence diagram showing a third operation example of the communication system according to the exemplary embodiment.
[Fig. 8] Fig. 8 is a block diagram showing a configuration example of a server according to the exemplary embodiment.
[Fig. 9] Fig. 9 is a block diagram showing a configuration example of a UE according to the exemplary embodiment.

### Description of Embodiments

Hereinafter, an exemplary embodiment of a server and a UE according to the present invention, and a communication system to which these server and UE are applied, will be described with the accompany drawings.

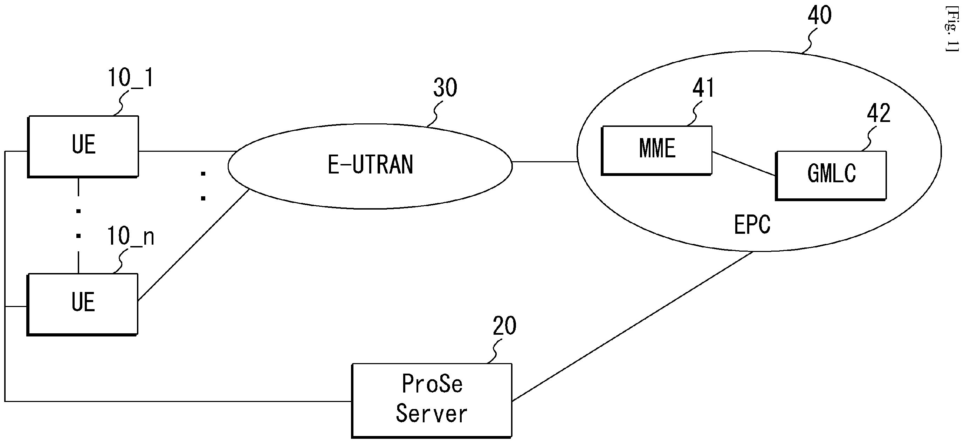

As shown in Fig. 1, a communication system according to this exemplary embodiment includes a plurality of UEs 10_1 to 10_n (hereinafter may be collectively referred to by a code 10), a ProSe server 20, an E-UTRAN (Evolved Universal Terrestrial Radio Access Network) 30, and a EPC (Evolved Packet Core) 40. The E-UTRAN 30 is formed by one or more eNBs (not shown). The EPC 40 includes, as its network nodes, an MME (Mobility Management Entity) 41 which manages mobility of the UEs 10_1 to 10_n, and a GMLC 42 which stores location information of the UEs 10_1 to 10_n.

The UE 10 attaches to the EPC 40 thorough the E-UTRAN 30, thereby functioning as a typical UE. Moreover, the UE 10 uses the above-mentioned "direct mode" path, thereby conducting ProSe communication. Note that the UE 10 may use the above-mentioned "locally-routed" path.

The ProSe server 20 can communicate with the GMLC 42 to monitor the location information of the UE 10. Moreover, as will be described later, the ProSe server 20 manages security of the ProSe communication based on the location information.

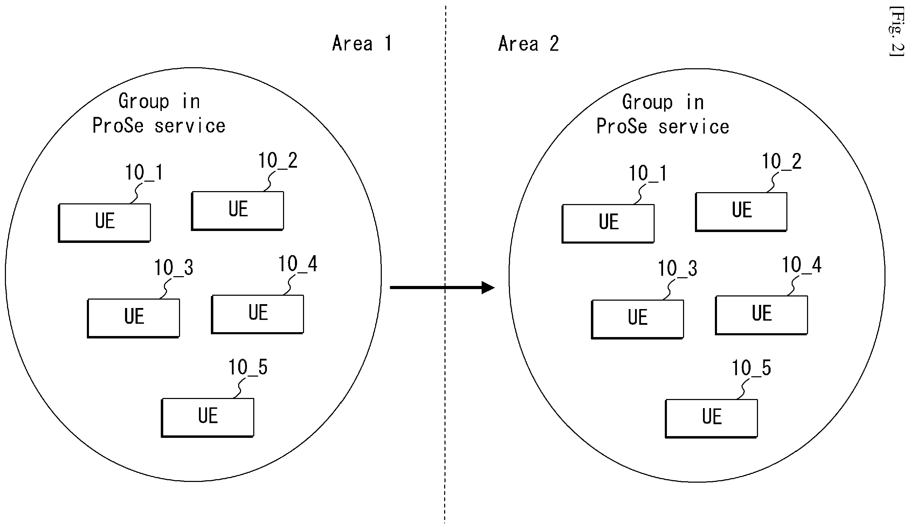

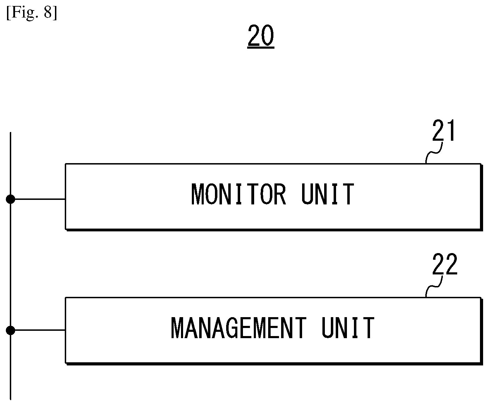

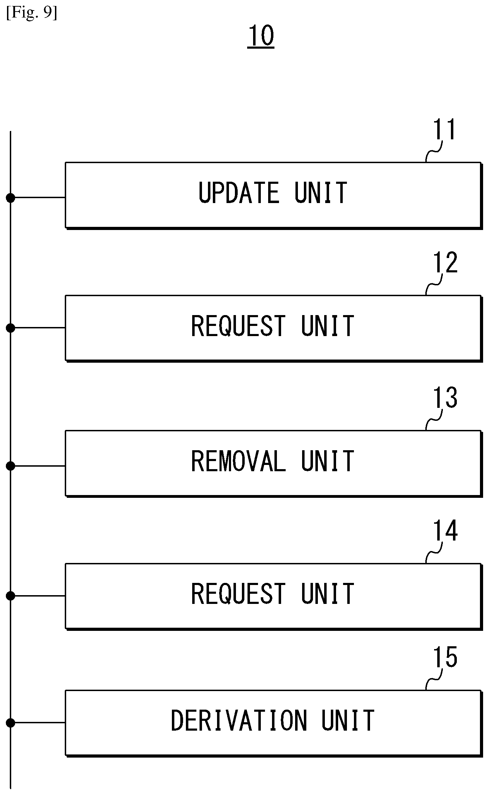

Next, operation examples of this exemplary embodiment will be described in detail with reference to Figs. 2 to 7. Note that configuration examples of the ProSe server 20 and the UE 10 will be described later with reference to Figs. 8 and 9.

In this exemplary embodiment, assume that ProSe service is in use for a group of UEs 10_1 to 10_n, and the security context is established. The following scenarios of how location change happens are considered:
1) None of UEs has location change (hereinafter, referred to as "Case 1");
2) All of the UEs have changed location, but they stay in proximity to each other within a predetermined distance (hereinafter, referred to as "Case 2");
3) One or more UEs (travelers) have moved out of proximity from other UEs and they do not use ProSe service (hereinafter, referred to as "Case 3"); and
4) One or more UEs have moved out of proximity from the UEs and they want to keep ProSe service among the travelers (hereinafter, referred to as "Case 4").

In order to know if the UEs 10_1 to 10_n have moved, the ProSe Server 20 can request the GMLC 42 to send location information of the UEs 10_1 to 10_n peri-odically when the ProSe service is activated for the UEs. Each time the ProSe Server 20 receives the location of the group member of UEs 10_1 to 10_n, the ProSe Server 20 compares the location with the previous location information that the ProSe Server 20 stores.

Further, assume that one of the UEs 10_1 to 10_n functions as a group manager in the group. The location of group manager is taken as the Origin of the coordinate, to determine whether other UEs are in proximity.

### <Operations in Case 1>

If the location information sent from the GMLC 42 is the same with the previous location information, the ProSe Server 20 determines the group location is not changed and no group management or security needs to be updated.

### <Operations in Case 2>

If the location information sent from the GMLC 42 shows that all of UEs 10_1 to 10_5 shown in Fig. 2 have changed their location, but they are still in the same range compared to the group manager, no group management or security needs to be updated according to the location change. However, all members can update keys normally even when they are in different location.

### <Operations in Case 3>

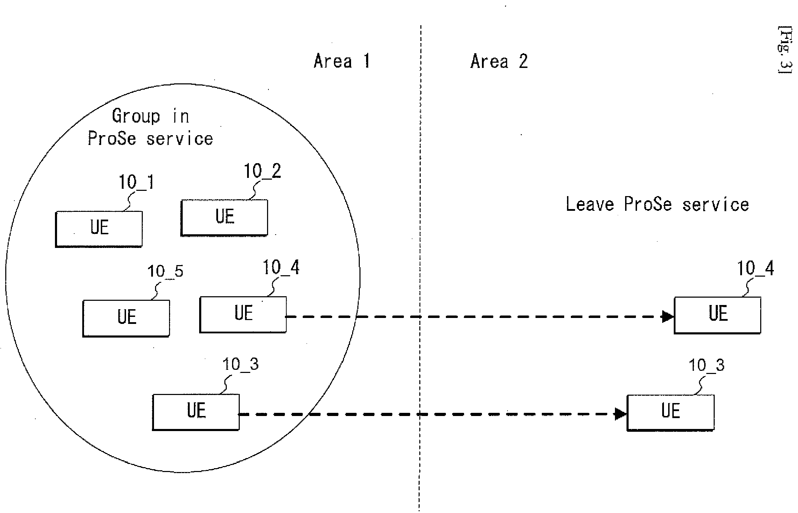

If the location information sent from the GMLC 42 shows that as shown in Fig. 3, some UEs 10_3 and 10_4 are out of proximity range and the moved UEs 10_3 and 10_4 do not want to or cannot keep the ProSe service, group and security management needs update.

### <Operations in Case 4>

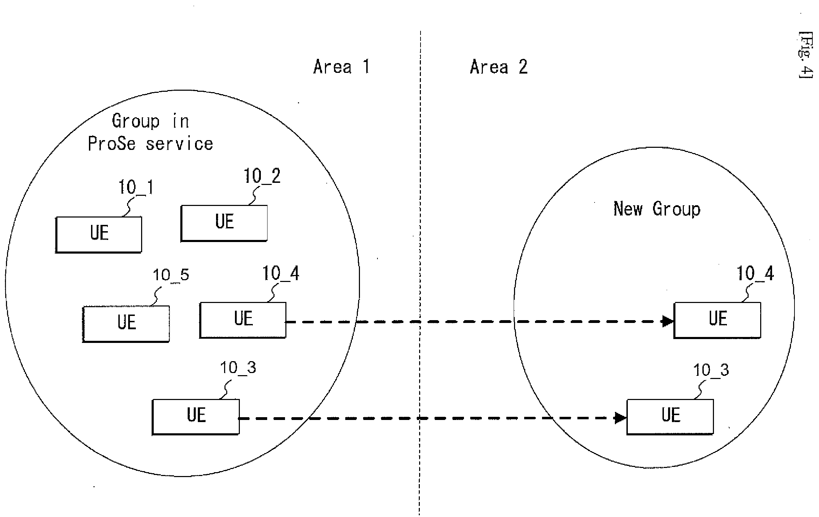

If the location information sent from the GMLC 42 shows that as shown in Fig. 4, some UEs 10_3 and 10_4 are out of proximity range and the traveler UEs 10_3 and 10_4 want to keep ProSe service between themselves instead, the group and security management needs update.

In the following two sections, detail description of operations in Case 3 and Case 4 will be given. In both cases, assume that the UE 10_1 is the group manager, and the UEs 10_3 and 10_4 left the group.

### 1. Group and security management for Case 3

Assume that the UEs 10_1 to 10_5 were in the same ProSe group. The UEs 10_3 and 10_4 are not in proximity with the UE 10_1, 10_2 and 10_5 anymore. The ProSe Server 20 determines that the UE 10_3 and 10_4 do not use ProSe service, according to capabilities of the UE 10_3 and 10_4, and policy for ProSe service. The ProSe Server 20 will inform the remained group UEs 10_1, 10_2 and 10_5 that the UE 10_3 and 10_4 left the group and are no more available for the ProSe service.

Group and security management is different when the group is temporary or dedicated.

When the group is temporary or the UEs 10_3 and 10_4 are temporary members, the group does not expect the UE 10_3 and 10_4 to return and resume the ProSe service. Any UE joins the group is considered as a new member. In order to prevent the keys from being reused, the remained group member of UEs will need new session keys. The UEs 10_3 and 10_4 remove the session keys. The session keys are a pair of confidentiality and integrity keys.

On the other hand, when the group is dedicated or the UEs 10_3 and 10_4 are dedicated members, the UEs 10_3 and 10_4 may return to the group. The group manager can decide to update the group and security management after a period of time. This is done by starting a timer after the group manager is indicated that the UEs 10_3 and 10_4 left the group. The UEs 10_3 and 10_4 will remove the session keys after the period time when they will not return to the group. This is to prevent the UEs 10_3 and 10_4 from using the key to perform direct discovery and communication without network authorization.

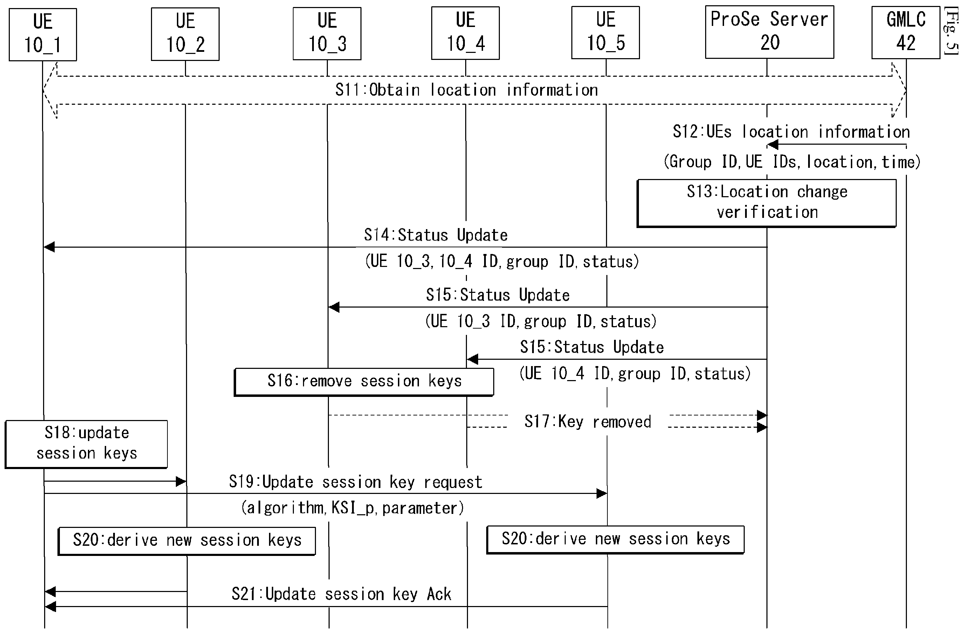

In the temporary case, as shown in Fig. 5, the GMLC 42 obtains UEs location information, following normal procedure (step S11).

Then, the GMLC 42 provides the UEs location information to the ProSe Server 20 with group ID, UE IDs, location and the time when the location was detected (step S12). This can be periodical according to network and/or group setting.

The ProSe Server 20 compares the current location with previous location, to determine which UEs moved out of group range (step S13).

If the ProSe Server 20 detected that the UEs 10_3 and 10_4 moved out of group range, the ProSe Server 20 sends Status Update to the group manager UE 10_1, indicating IDs of the UEs 10_3 and 10_4, group ID and status of left the group (step S14).

The ProSe Server 20 also sends Status Update to the UEs 10_3 and 10_4 with their ID (IDs of the UEs 10_3 and 10_4), group ID and status of out of range (step S15).

The UEs 10_3 and 10_4 will remove the session keys (step S16).

The UEs 10_3 and 10_4 optionally report to the ProSe server 20 that the session keys are removed (step S17).

The group manager UE 10_1 derives new session keys from a key Kp (step 18). The key Kp is a key related to the group and also may related to the ProSe server 20.

The group manager UE 10_1 sends Update session key request to the remained group member (step S19). The UEs 10_2 and 10_5 are the remained member here. The request includes algorithm, indicator KSI (Key Set Identifier)_p related to the key Kp, and other parameters for session key derivation. The message is confidentiality and integrity protected with the current session keys.

The remained member UEs 10_2 and 10_5 derive new session keys separately (step S20).

The UEs 10_2 and 10_5 send Update session key Ack (Acknowledge) to group manager UE 10_1 (step S21). This message is confidentiality and integrity protected with the new session keys.

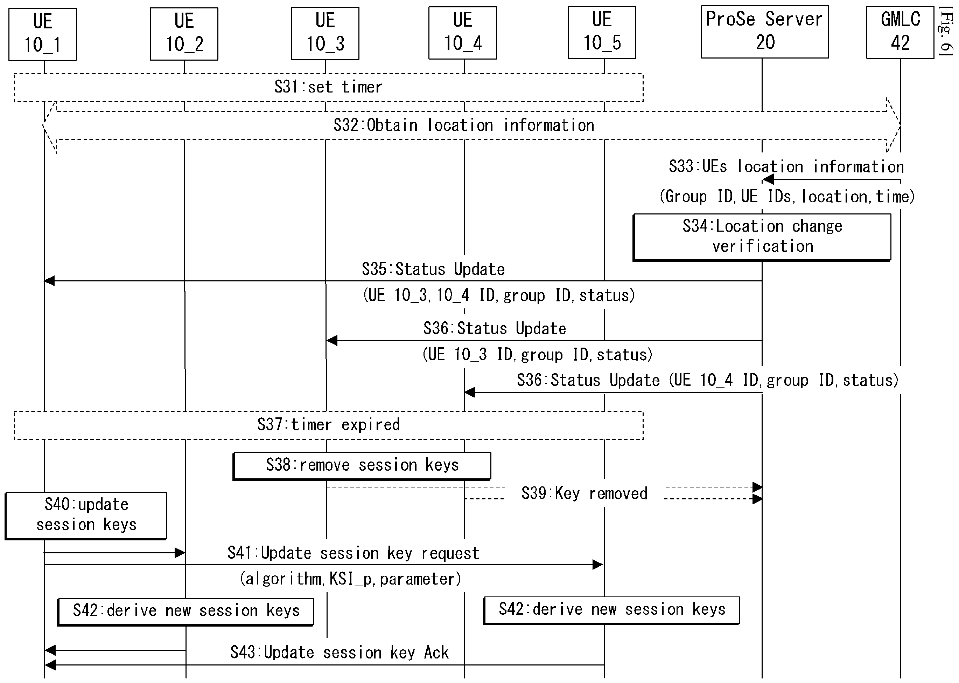

In the dedicated case, as shown in Fig. 6, a timer is set and allocated to dedicated group members when the current session key is activated (step S31).

Steps S32 to 36 are the same with Steps S11 to S15 shown in Fig. 5.

The timer is started when UEs receive the indication that the UEs 10_3 and 10_4 are out of range. The session keys remain till the timer has expired (step S37).

When the timer has expired, the UEs 10_3 and 10_4 will remove the session keys (step S38).

The UEs 10_3 and 10_4 optionally report to the ProSe server 20 that the session keys are removed (step S39).

When the timer has expired at step S37, the group manager UE 10_1 derives new session keys from the key Kp (step S40).

Steps S41 to S43 are the same with steps S19 to S21 shown in Fig. 5.

The Status Update message is confidentiality and integrity protected.

### 2. Group and security management for Case 4

Assume that the UEs 10_1 to 10_5 were in the same ProSe group. The UEs 10_3 and 10_4 are not in proximity with the UEs 10_1, 10_2 and 10_5 anymore. The UEs 10_3 and 10_4 will use ProSe service between them. The ProSe Server 20 will inform the remained group UEs that the UEs 10_3 and 10_4 left the group. The ProSe Server 20 will also inform the UEs 10_3 and 10_4 that they are out of range from the previous group. The ProSe server 20 can determine that the UEs 10_3 and 10_4 can still use ProSe service with each other.

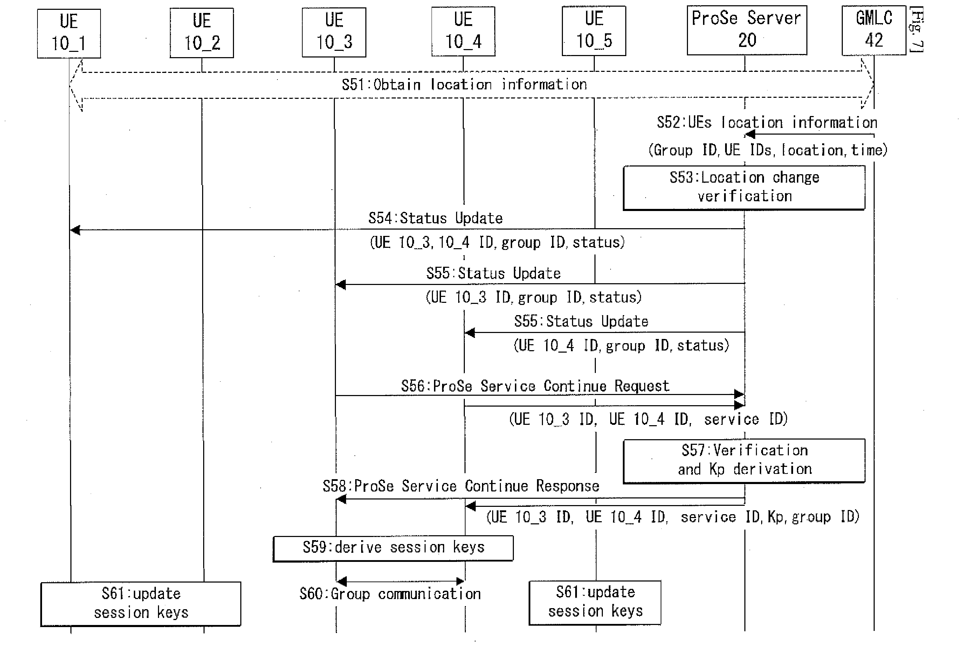

There are two ways for the UEs 10_3 and 10_4 to keep communication: 1) they can create a new group with a new group ID and derive new session keys; 2) they can use the same group ID but change their session keys. The first case is depicted in Fig. 7 and figure for the second case is omitted.

As shown in Fig. 7, the GLMC 42 obtains UEs location information (step S51).

Then, the GMLC 42 provides the UEs location information to the ProSe server 20 with group ID, UE IDs, location and the time when the location was detected (step S52). This can be periodical according to network and/or group setting.

The ProSe server 20 compares the current location with previous location, to determine which UEs moved out of group range (step S53).

If the ProSe server 20 detected that the UEs 10_3 and 10_4 moved out of group range, the ProSe server 20 sends Status Update to the group manager UE 10_1, indicating IDs of the UEs 10_3 and 10_4, group ID and status of left the group (step S54).

The ProSe server 20 also sends Status Update to the UEs 10_3 and 10_4 with their ID (IDs of the UEs 10_3 and 10_4), group ID and status of out of range (step S55).

The UEs 10_3 and 10_4 request to continue their ProSe Service with each other, by sending ProSe Service Continue Request, contain the other UE ID, service ID (step S56).

The ProSe server 20 performs verification if the UEs 10_3 and 10_4 are allowed to continue to have ProSe service, and then derives a new Kp (step S57).

The ProSe server 20 sends ProSe Service Continue Response to the UEs 10_3 and 10_4, with IDs of the UEs 10_3 and 10_4, service ID, Kp, and new group ID (step S58).

The UEs 10_3 and 10_4 derive session keys from the Kp they received (step S59).

The UEs 10_3 and 10_4 use the session key to continue their group communication (step S60).

The UE 10_1, and other remained group member UEs 10_2 and 10_5 update their session keys as with in Case 3 (step S61).

The Status Update, ProSe Service Continue Request, and ProSe Service Continue Response message are confidentiality and integrity protected.

### 3. Location information verification

The GMLC 42 can send UEs location information to the ProSe server 20:
1) Periodically, the frequency can be set by the ProSe server 20 for given group and/or the service;
2) any time it receives a report from MME/SGSN; and
3) at ProSe Server request.

The location information contains the location information of all group members, the group ID, UE ID, each UE's location. The ProSe server 20 stores the previous location information.

After received the current location information, the ProSe server 20 compares the previous and current location, and compares the member UEs location information with group manager location, to see if UEs are still in the range. This means, the location of group manager is used as the origin to determine whether UEs are in the group range.

According to this exemplary embodiment, it is possible to achieve the following advantageous effects (1) to (4), for example.

(1) ProSe Server can support group management and indicate the UEs whether they are still in proximity.

(2) Group manager can decide whether to derive new session key or keep the current session keys, depend on the group member status. This can prevent the session keys being maliciously reused.

(3) Group manager can update session keys and indicate other remained group members to do the same.

(4) UEs which moved out of the group range can continue to use ProSe service with ProSe Server support.

Next, configuration examples of the ProSe server 20 and the UE 10 according to this exemplary embodiment will be described with reference to Figs. 8 and 9.

As show in Fig. 8, the ProSe server 20 includes a monitor unit 21 and a management unit 22. The monitor unit 21 monitors locations of the UEs 10_1 to 10_n shown in Fig. 1, by periodically acquiring the location information from the GMLC 42, for example. The management unit 22 manages security of the ProSe communication between the UEs 10_1 to 10_n based on the locations, as shown in Figs. 5 to 7. Note that these units 21 and 22 are mutually connected with each other through a bus or the like. These units 21 and 22 can be configured by, for example, a transceiver which conducts communication with the UEs 10_1 to 10_n through the E-UTRAN 30 and the EPC 40, and a controller such as a CPU (Central Processing Unit) which controls this transceiver.

As show in Fig. 9, the UE 10 includes an update unit 11 and a request unit 12, in a case of functioning as the group manager. The update unit 11 updates the session keys in response to the Status Update message from the ProSe server 20, when the Status Update message indicates that one or more UEs in the group have moved out of the range of the ProSe communication. The request unit 12 sends the Update session key request to the remained group member UEs.

As substitutes for or in addition to the units 11 and 12, the UE 10 can include a removal unit 13, a request unit 14, and a derivation unit 15. The removal unit 13 removes session keys in response to the Status Update message from the ProSe server 20, when the Status Update message indicates that the UE 10 itself has moved out of the range of the ProSe communication. The request unit 14 sends the ProSe Service Continue Request to the ProSe server 20. The derivation unit 15 derives new session keys upon receiving the ProSe Service Continue Response from the ProSe server 20.

Note that these units 11 to 15 are mutually connected with each other through a bus or the like. These units 11 to 15 can be configured by, for example, a transceiver which conducts communication with the ProSe server 20 through the E-UTRAN 30 and the EPC 40, and a controller such as a CPU which controls this transceiver.

Note that the present invention is not limited to the above-mentioned exemplary embodiment, and it is obvious that various modifications can be made by those of ordinary skill in the art based on the recitation of the claims.

The whole or part of the exemplary embodiment disclosed above can be described as, but not limited to, the following supplementary notes.

### (Supplementary note 1)

GMLC sends UE location information to ProSe Server, periodically, when it receives report from MME/SGSN or at ProSe Server request.

### (Supplementary note 2)

ProSe Server stores UE previous location and compare the current location with its previous location and also with the group manager location to determine whether any group member has move out of group range.

### (Supplementary note 3)

ProSe Server indicates the group manager and UEs which moved out of range about the location change.

### (Supplementary note 4)

Group manager update session keys and indicate other remained members to do the same by sending Update session key request.

### (Supplementary note 5)

Dedicated member UEs can have a timer related to the session key deployed when the session key was derived. The timer starts when UEs are out of range, and UEs can keep the session key till the timer has expired.

### (Supplementary note 6)

UEs which move out of group range request to continue ProSe service with each other, by sending ProSe Service Continue Request.

### (Supplementary note 7)

ProSe Server determines whether the above mentioned UEs can continue ProSe service with each other, by sending ProSe Service Continue Response.

This application is based upon and claims the benefit of priority from Japanese patent application No. 2013-223326.

### Reference Signs List

- 10, 10_1-10_n: UE
- 11: UPDATE UNIT
- 12, 14: REQUEST UNIT
- 13: REMOVAL UNIT
- 15: DERIVATION UNIT
- 20: ProSe SERVER
- 21: MONITOR UNIT
- 22: MANAGEMENT UNIT
- 30: E-UTRAN
- 40: EPC
- 41: MME
- 42: GMLC

## Claims

1. A server (20) in a communication system for Proximity based Services, ProSe, including a plurality of User Equipment, UEs (10_1-10_n), in proximity, an Evolved Universal Terrestrial Radio Access Network, E-UTRAN (30), and an Evolved Packet Core, EPC (40), comprising:
monitor means (21) for monitoring locations of UEs (10_1-10_n) that are grouped to conduct ProSe communication with each other; and
management means (22) for managing security of the ProSe communication based on the locations.

2. The server (20) according to Claim 1, wherein the management means (22) is configured to:
instruct, when it is detected as a result of the monitoring that one or more first UEs (10_1-10_n) among the UEs (10_1-10_n) have moved out of a range of the ProSe communication, the first UEs (10_1-10_n) to remove a session key that has been used for the ProSe communication; and
instruct a second UE (10_1-10_n) among remaining UEs (10_1-10_n) to update the session key between the remaining UEs (10_1-10_n).

3. The server (20) according to Claim 2, wherein the management means (22) is configured to determine, in response to requests from the first UEs (10_1-10_n), whether the first UEs (10_1-10_n) are allowed to continue conducting ProSe communication with each other.

4. The server (20) according to Claim 3, wherein the management means (22) is configured to instruct, when it is determined that the first UEs (10_1-10_n) are allowed to continue conducting the ProSe communication, the first UEs (10_1-10_n) to derive a new session key.

5. The server (20) according to any one of Claims 2 to 4, wherein the management means (22) is configured not to issue the instruction when it is determined as the result of the monitoring that none of the UEs (10_1-10_n) has changed the location, or that all of the UEs (10_1-10_n) have changed the location but stay within a group range.

6. The server (20) according to any one of Claims 1 to 5, wherein the monitor means (21) is configured to:
periodically acquire information on the locations; and
compare currently acquired information with previously acquired information to determine whether or not any one of the UEs (10_1-10_n) has moved out of the group range.

7. The server (20) according to Claim 6, wherein the monitor means is configured to acquire the information from a Gateway Mobile Location Centre, GMLC (42).

8. A UE (10_1-10_n) in a communication system for Proximity based Services, ProSe, including an Evolved Universal Terrestrial Radio Access Network, E-UTRAN (30), and an Evolved Packet Core, EPC (40), that is grouped with different UEs (10_1-10_n) in proximity to conduct ProSe communication with each other, the UE (10_1-10_n) comprising:
update means (11) for updating a session key used for the ProSe communication in response to reception of an instruction from a server (20), the instruction being issued when the server (20) detects that one or more UEs (10_1-10_n) among the different UEs (10_1-10_n) have moved out of a range of the group; and
request means (12) for requesting remaining UEs to update the session key.

9. The UE (10_1-10_n) according to Claim 8, wherein until a predetermined time elapses from the reception of the instruction, the update means (11) is configured to wait the update and the request means (12) is configured to wait the request.

10. The UE (10_1-10_n) according to claim 8, further comprising:
removal means (13) for removing a session key used for the ProSe communication in response to reception of an instruction from a server (20), the instruction being issued when the server (20) detects that the UE (10_1-10_n) has moved out of a range of the group.

11. The UE (10_1-10_n) according to Claim 8, further comprising:
request means (14) for requesting the server (20) to continue conducting ProSe communication with one or more UEs (10_1-10_n) that have moved out of the group range together with the UE (10_1-10_n).

12. The UE (10_1-10_n) according to Claim 8, further comprising:
derivation means (15) for deriving a new session key when the server (20) determines that the UE (10_1-10_n) is allowed to continue conducting the ProSe communication.

13. A communication system for Proximity based Services, ProSe, comprising:
an Evolved Universal Terrestrial Radio Access Network, E- UTRAN (30);
an Evolved Packet Core, EPC (40);
a plurality of UEs (10_1-10_n) in proximity that are grouped to conduct ProSe communication with each other; and
a server (20) that is configured to monitor locations of the plurality of UEs, and manages security of the ProSe communication based on the locations.

14. A method of controlling operations in a server (20) in a communication system for Proximity based Services, ProSe, including a plurality of User Equipment, UEs (10_1-10_n), in proximity, an Evolved Universal Terrestrial Radio Access Network, E-UTRAN (30), and an Evolved Packet Core, EPC (40), the method comprising:
monitoring locations of UEs (10_1-10_n) that are grouped to conduct ProSe communication with each other; and
managing security of the ProSe communication based on the locations.

15. A method of controlling operations of a UE (10_1-10_n) in a communication system for Proximity based Services, ProSe, including an Evolved Universal Terrestrial Radio Access Network, E-UTRAN (30), and an Evolved Packet Core, EPC (40), that is grouped with different UEs (10_1-10_n) in proximity to conduct ProSe communication with each other, the method comprising:
updating a session key used for the ProSe communication in response to reception of an instruction from a server (20), the instruction being issued when the server (20) detects that one or more UEs (10_1-10_n) among the different UEs (10_1-10_n) have moved out of a range of the group; and
requesting remaining UEs (10_1-10_n) to update the session key.

16. The method according to claim 15, further comprising:
removing a session key used for the ProSe communication in response to reception of an instruction from a server (20), the instruction being issued when the server (20) detects that the UE (10_1-10_n) has moved out of a range of the group.

## Patentansprüche

1. Server (20) in einem Kommunikationssystem für nähebasierte Dienste ProSe, das mehrere Benutzergeräte UEs (10_1 - 10_n) in der Nähe, ein Evolved Universal Terrestrial Radio Access Network E-UTRAN (30) und einen Evolved Packet Core EPC (40) umfasst, der aufweist:
eine Überwachungseinrichtung (21) zum Überwachen von Standorten von UEs (10_1 - 10_n), die gruppiert sind, um ProSe-Kommunikation miteinander auszuführen; und
eine Verwaltungseinrichtung (22) zum Verwalten der Sicherheit der ProSe-Kommunikation auf Basis der Standorte.

2. Server (20) nach Anspruch 1, wobei die Verwaltungseinrichtung (22) konfiguriert ist, um:
wenn als ein Ergebnis der Überwachung erfasst wird, dass ein oder mehrere erste UEs (10_1 - 10_n) von den UEs (10_1 - 10_n) sich aus einer Reichweite der ProSe-Kommunikation bewegt haben, anzuweisen, dass die ersten UEs (10_1 - 10_n) einen Sitzungsschlüssel, der für die ProSe-Kommunikation verwendet wurde, entfernen; und
ein zweites UE (10_1 - 10_n) von den verbleibenden UEs (10_1 - 10_n) anzuweisen, einen Sitzungsschlüssel, der für die ProSe-Kommunikation verwendet wurde, zu aktualisieren.

3. Server (20) nach Anspruch 2, wobei die Verwaltungseinrichtung (22) konfiguriert ist, um ansprechend auf Anforderungen von den ersten UEs (10_1 - 10_n) zu bestimmen, ob die ersten UEs (10_1 - 10_n) weiterhin die Durchführung der ProSe-Kommunikation miteinander ausführen dürfen.

4. Server (20) nach Anspruch 3, wobei die Verwaltungseinrichtung (22) konfiguriert ist, um, wenn bestimmt wird, dass die ersten UEs (10_1 - 10_n) die ProSe-Kommunikation weiterhin ausführen dürfen, anzuweisen, dass die ersten UEs (10_1 - 10_n) einen neuen Sitzungsschlüssel ableiten.

5. Server nach einem der Ansprüche 2 bis 4, wobei die Verwaltungseinrichtung (22) konfiguriert ist, um die Anweisung nicht auszugeben, wenn als das Ergebnis der Überwachung bestimmt wird, dass keines der UEs (10_1 - 10_n) den Standort geändert hat oder alle der UEs (10_1 - 10_n) den Standort geändert haben, aber innerhalb einer Gruppenreichweite bleiben.

6. Server (20) nach einem der Ansprüche 1 bis 5, wobei die Überwachungseinrichtung (21) konfiguriert ist, um:
regelmäßig Informationen über die Standorte zu erlangen; und
aktuell erlangte Informationen mit früher erlangten Informationen zu vergleichen, um zu bestimmen, ob eines der UEs (10_1 - 10_n) sich aus der Gruppenreichweite bewegt hat oder nicht.

7. Server (20) nach Anspruch 6, wobei die Überwachungseinrichtung konfiguriert ist, um die Informationen von einem Gateway Mobile Location Centre GMLC (42) zu erlangen.

8. UE (10_1 - 10_n) in einem Kommunikationssystem für nähebasierte Dienste ProSe, das ein Evolved Universal Terrestrial Radio Access Network E-UTRAN (30) und einen Evolved Packet Core EPC (40) umfasst, das mit verschiedenen UEs (10_1 - 10_n) in der Nähe gruppiert ist, um ProSe-Kommunikation miteinander auszuführen, wobei das UE (10_1 - 10_n) aufweist:
eine Aktualisierungseinrichtung (11) zum Aktualisieren eines Sitzungsschlüssels, der für die ProSe-Kommunikation verwendet wird, ansprechend auf den Empfang einer Anweisung von einem Server (20), wobei die Anweisung ausgegeben wird, wenn der Server (20) erfasst, dass ein oder mehrere UEs (10_1 - 10_n) von den verschiedenen UEs (10_1 - 10_n) sich aus einer Reichweite der Gruppe bewegt haben; und
eine Anforderungseinrichtung (12) zum Auffordern verbleibender UEs, den Sitzungsschlüssel zu aktualisieren.

9. UE (10_1 - 10_n) nach Anspruch 8, wobei, bis eine vorgegebene Zeit seit dem Empfang der Anweisung vergangen ist, die Aktualisierungseinrichtung (11) konfiguriert ist, um die Aktualisierung abzuwarten, und die Anforderungseinrichtung (12) konfiguriert ist, um die Aufforderung abzuwarten.

10. UE (10_1 - 10_n) nach Anspruch 8, das ferner aufweist:
eine Entfernungseinrichtung (13) zum Entfernen eines Sitzungsschlüssels, der für die ProSe-Kommunikation verwendet wird, ansprechend auf den Empfang einer Anweisung von einem Server (20), wobei die Anweisung ausgegeben wird, wenn der Server (20) erfasst, dass das UE (10_1 - 10_n) sich aus einer Reichweite der Gruppe bewegt hat.

11. UE (10_1 - 10_n) nach Anspruch 8, das ferner aufweist:
eine Anforderungseinrichtung (14) zum Auffordern des Servers (20), das Ausführen der ProSe-Kommunikation mit einem oder mehreren UEs (10_1 - 10_n), die sich zusammen mit dem UE(10_1 - 10_n) aus der Gruppenreichweite bewegt haben, fortzusetzen.

12. UE (10_1 - 10_n) nach Anspruch 8, das ferner aufweist:
eine Ableitungseinrichtung (15) zum Ableiten eines neuen Sitzungsschlüssels, wenn der Server (20) bestimmt, dass das UE (10_1 - 10_n) weiterhin das Ausführen der ProSe-Kommunikation fortsetzen darf.

13. Kommunikationssystem für nähebasierte Dienste ProSe, das aufweist:
ein Evolved Universal Terrestrial Radio Access Network E-UTRAN (30);
einen Evolved Packet Core EPC (40);
mehrere Benutzergeräte UEs (10_1 - 10_n) in der Nähe, die gruppiert sind, um ProSe-Kommunikation miteinander auszuführen; und
einen Server (20), der konfiguriert ist, um Standorte der mehreren UEs (10_1 - 10_n) zu überwachen, und der die Sicherheit der ProSe-Kommunikation basierend auf den Standorten verwaltet.

14. Verfahren zur Steuerung von Betrieben in einem Server (20) in einem Kommunikationssystem für nähebasierte Dienste ProSe, das mehrere Benutzergeräte UEs (10_1 - 10_n) in der Nähe, ein Evolved Universal Terrestrial Radio Access Network E-UTRAN (30) und einen Evolved Packet Core EPC (40) umfasst, wobei das Verfahren aufweist:
Überwachen von Standorten von UEs (10_1 - 10_n), die gruppiert sind, um ProSe-Kommunikation miteinander auszuführen; und
Verwalten der Sicherheit der ProSe-Kommunikation auf Basis der Standorte.

15. Verfahren zum Steuern von Betrieben eines UE (10_1 - 10_n) in einem Kommunikationssystem für nähebasierte Dienste ProSe, das ein Evolved Universal Terrestrial Radio Access Network E-UTRAN (30) und einen Evolved Packet Core EPC (40) umfasst, das mit verschiedenen UEs (10_1 - 10_n) in der Nähe gruppiert ist, um ProSe-Kommunikation miteinander auszuführen, wobei das Verfahren aufweist:
Aktualisieren eines Sitzungsschlüssels, der für die ProSe-Kommunikation verwendet wird, ansprechend auf den Empfang einer Anweisung von einem Server (20), wobei die Anweisung ausgegeben wird, wenn der Server (20) erfasst, dass ein oder mehrere erste UEs (10_1 - 10_n) von den verschiedenen UEs (10_1 - 10_n) sich aus einer Reichweite der Gruppe bewegt haben; und
Auffordern der verbleibenden UEs (10_1 - 10_n), den Sitzungsschlüssel zu aktualisieren.

16. Verfahren nach Anspruch 15, das ferner aufweist:
Entfernen eines Sitzungsschlüssels, der für die ProSe-Kommunikation verwendet wird, ansprechend auf den Empfang einer Anweisung von einem Server (20), wobei die Anweisung ausgegeben wird, wenn der Server (20) erfasst, dass das UE (10_1 - 10_n) sich aus einer Reichweite der Gruppe bewegt hat.

## Revendications

1. Serveur (20) dans un système de communication pour des services basés sur la proximité, ProSe, incluant une pluralité d'équipements utilisateurs, UE (10_1-10_n), à proximité, un réseau universel d'accès radio terrestre évolué, E-UTRAN (30) et un coeur de paquet évolué, EPC (40), comprenant :
un moyen de surveillance (21) pour surveiller des emplacements d'UE (10_1-10_n) qui sont groupés pour mener une communication de ProSe les uns avec les autres ; et
un moyen de gestion (22) pour gérer la sécurité de la communication de ProSe sur la base des emplacements.

2. Serveur (20) selon la revendication 1, dans lequel le moyen de gestion (22) est configuré pour :
donner une instruction, lorsqu'il est détecté comme résultat de la surveillance qu'un ou plusieurs premiers UE (10_1-10_n) parmi les UE (10_1-10_n) sont sortis d'une portée de la communication de ProSe, aux premiers UE (10_1-10_n) pour supprimer une clé de session qui a été utilisée pour la communication de ProSe ; et
donner une instruction à un second UE (10_1-10_n) parmi des UE restants (10_1-10_n) pour mettre à jour la clé de session entre les UE restants (10_1-10_n).

3. Serveur (20) selon la revendication 2, dans lequel le moyen de gestion (22) est configuré pour déterminer, en réponse à des demandes des premiers UE (10_1-10_n), si les premiers UE (10_1-10_n) sont autorisés à poursuivre les communications de ProSe entre eux.

4. Serveur (20) selon la revendication 3, dans lequel le moyen de gestion (22) est configuré pour donner une instruction, lorsqu'il est déterminé que les premiers UE (10_1-10_n) sont autorisés à poursuivre les communications de ProSe, aux premiers UE (10_1-10_n) pour déduire une nouvelle clé de session.

5. Serveur (20) selon l'une quelconque des revendications précédentes 2 à 4, dans lequel le moyen de gestion (22) est configuré pour ne pas délivrer l'instruction lorsqu'il est déterminé comme résultat de la surveillance qu'aucun des UE (10_1-10_n) n'a changé son emplacement, ou que tous les UE (10_1-10_n) ont changé leur emplacement, mais restent à l'intérieur d'une portée de groupe.

6. Serveur (20) selon l'une quelconque des revendications 1 à 5, dans lequel le moyen de surveillance (21) est configuré pour :
acquérir périodiquement des informations sur les emplacements ; et
comparer des informations actuellement acquises à des informations précédemment acquises pour déterminer si l'un quelconque des UE (10_1-10_n) est sorti ou non de la portée de groupe.

7. Serveur (20) selon la revendication 6, dans lequel le moyen de surveillance est configuré pour acquérir les informations d'un centre d'emplacement mobile de passerelle, GMLC (42).

8. Équipement utilisateur, UE, (10_1-10_n) dans un système de communication pour des services basés sur la proximité, ProSe, incluant un réseau universel d'accès radio terrestre évolué, E-UTRAN (30) et un coeur de paquet évolué, EPC (40), qui est groupé avec différents UE (10_1-10_n) à proximité pour mener une communication de ProSe les uns avec les autres, l'UE (10_1-10_n) comprenant :
un moyen de mise à jour (11) pour mettre à jour une clé de session utilisée pour la communication de ProSe en réponse à une réception d'une instruction d'un serveur (20), l'instruction étant délivrée lorsque le serveur (20) détecte qu'un ou plusieurs UE (10_1-10_n) parmi les différents UE (10_1-10_n) sont sortis d'une portée du groupe ; et
un moyen de demande (12) pour demander aux UE restants de mettre à jour la clé de session.

9. UE (10_1-10_n) selon la revendication 8, dans lequel, jusqu'à ce qu'un temps prédéterminé expire depuis la réception de l'instruction, le moyen de mise à jour (11) est configuré pour attendre la mise à jour et le moyen de demande (12) est configuré pour attendre la demande.

10. UE (10_1-10_n) selon la revendication 8, comprenant en outre :
un moyen de suppression (13) pour supprimer une clé de session utilisée pour la communication de ProSe en réponse à une réception d'une instruction depuis un serveur (20), l'instruction étant délivrée lorsque le serveur (20) détecte que l'UE (10_1-10_n) est sorti d'une portée du groupe.

11. UE (10_1-10_n) selon la revendication 8, comprenant en outre :
un moyen de demande (14) pour demander au serveur (20) de poursuivre une communication de ProSe avec un ou plusieurs UE (10_1-10_n) qui sont sortis de la portée de groupe conjointement avec l'UE (10_1-10_n).

12. UE (10_1-10_n) selon la revendication 8, comprenant en outre :
un moyen de déduction (15) pour déduire une nouvelle clé de session lorsque le serveur (20) détermine que l'UE (10_1-10_n) est autorisé à poursuivre la communication de ProSe en cours.

13. Système de communication pour des services basés sur la proximité, ProSe, comprenant :
un réseau universel d'accès radio terrestre évolué, E-UTRAN (30) ;
un coeur de paquet évolué, EPC (40) ;
une pluralité d'UE (10_1-10_n) à proximité qui sont groupés pour mener une communication de ProSe les uns avec les autres ; et
un serveur (20) qui est configuré pour surveiller des emplacements de la pluralité d'UE et gérer la sécurité de la communication de ProSe sur la base des emplacements.

14. Procédé de commande d'opérations dans un serveur (20) dans un système de communication pour des services basés sur la proximité, ProSe, incluant une pluralité d'équipements utilisateurs, UE (10_1-10_n), à proximité, un réseau universel d'accès radio terrestre évolué, E-UTRAN (30), et un coeur de paquet évolué, EPC (40), le procédé comprenant :
la surveillance d'emplacements d'UE (10_1-10_n) qui sont groupés pour mener une communication de ProSe les uns avec les autres ; et
la gestion de la sécurité de la communication de ProSe sur la base des emplacements.

15. Procédé de commande d'opérations d'un UE (10_1-10_n) dans un système de communication pour des services basés sur la proximité, ProSe, incluant un réseau universel d'accès radio terrestre évolué, E-UTRAN (30), et un coeur de paquet évolué, EPC (40), qui est groupé avec différents UE (10_1-10_n) à proximité pour mener une communication de ProSe les uns avec les autres, le procédé comprenant :
la mise à jour d'une clé de session utilisée pour la communication de ProSe en réponse à une réception d'une instruction depuis un serveur (20), l'instruction étant délivrée lorsque le serveur (20) détecte qu'un ou plusieurs UE (10_1-10_n) parmi les différents UE (10_1-10_n) sont sortis d'une portée du groupe ; et
la demande aux UE restants (10_1-10_n) de mettre à jour la clé de session.

16. Procédé selon la revendication 15, comprenant en outre :
la suppression d'une clé de session utilisée pour la communication de ProSe en réponse à une réception d'une instruction depuis un serveur (20), l'instruction étant délivrée lorsque le serveur (20) détecte que l'UE (10_1-10_n) est sorti d'une portée du groupe.
